# EUROPÄISCHE PATENTANMELDUNG

(11) **EP 2 599 671 A2**
(43) Veröffentlichungstag der Anmeldung: **05.06.2013**
(21) Anmeldenummer: 12186807.9
(22) Anmeldetag: 01.10.2012
(51) Int. Cl.: B60S 1/38

(54) **Wischblatt**

(30) Priorität: 30.11.2011 DE 102011087456
(71) Anmelder: ROBERT BOSCH GMBH, 70442 Stuttgart (DE)
(72) Erfinder: Pieters, Eric, 6369 AK Simpelveld (NL)

(57) **Zusammenfassung**

Die Erfindung geht aus von einem Wischblatt zum Wischen von Scheiben (10), insbesondere von Scheiben (10) von Kraftfahrzeugen, mit einer an der zu wischenden Scheibe (10) anlegbaren, gummielastischen Wischleiste (12), die eine Haupterstreckungsrichtung (20) aufweist und im Wesentlichen parallel zur Haupterstreckungsrichtung (20) an einer federelastischen Trageinheit (18) gehalten ist, mit einer in einem Mittelabschnitt (22) der Trageinheit (18) auf einer von der Scheibe (10) abgewandten oberen Seite angeordneten Anschlussvorrichtung (28) für in Richtung zur Scheibe (10) belastende Gegenanschlussmittel (30) eines zwischen Umkehrlagen bewegbaren Wischerarms (58).

Es wird vorgeschlagen, dass die federelastische Trageinheit (18) zumindest in einem in der Haupterstreckungsrichtung (20) zusammenhängenden Teilabschnitt in einer senkrecht zur Haupterstreckungsrichtung (20) liegenden Ebene einen in zumindest drei Richtungen begrenzten Hohlraum (42) zur Aufnahme zumindest eines Teils der Wischleiste (12) ausbildet, wobei die zumindest drei Richtungen in der Ebene liegen und jede der zumindest drei Richtungen mit zumindest einer der zwei anderen Richtungen einen Winkel von 90° bildet.

## Beschreibung

### Stand der Technik

Die vorliegende Erfindung betrifft ein Wischblatt zum Wischen von Scheiben nach dem Oberbegriff des Anspruchs 1.

Wischblätter zum Wischen von Scheiben, insbesondere von Scheiben von Kraftfahrzeugen, sind bereits bekannt. Das Wischblatt kann eine Wischleiste umfassen, die als Hohlprofil mit einem Längskanal ausgebildet ist, in dem ein federelastisches, bogenförmig ausgebildetes Tragelement als Wischleistenträger angeordnet ist. Durch eine entsprechende Krümmung des Tragelements bei nicht an der Scheibe anliegendem Wischblatt werden Enden der in einem Betriebszustand des Wischblatts vollständig an der Scheibe angelegten Wischleiste durch das dann gespannte Tragelement in Richtung auf die Scheibe belastet. Die Krümmung des Wischblatts muss dabei etwas stärker sein als eine an der zu wischenden Scheibe gemessene stärkste Krümmung. Ein derartiges Wischblatt ist beispielsweise in der DE 198 35 065 A1 beschrieben.

### Offenbarung der Erfindung

Gegenstand der vorliegenden Erfindung ist ein Wischblatt zum Wischen von Scheiben, insbesondere von Scheiben von Kraftfahrzeugen, mit einer an der zu wischenden Scheibe anlegbaren, gummielastischen Wischleiste, die eine Haupterstreckungsrichtung aufweist und im Wesentlichen parallel zur Haupterstreckungsrichtung an einer federelastischen Trageinheit gehalten ist, mit einer in einem Mittelabschnitt der Trageinheit auf einer von der Scheibe abgewandten oberen Seite angeordneten Anschlussvorrichtung für in Richtung zur Scheibe belastende Gegenanschlussmittel eines zwischen Umkehrlagen bewegbaren Wischerarms.

Es wird vorgeschlagen, dass die federelastische Trageinheit zumindest in einem in der Haupterstreckungsrichtung zusammenhängenden Teilabschnitt in einer senkrecht zur Haupterstreckungsrichtung liegenden Ebene einen in zumindest drei Richtungen begrenzten Hohlraum zur Aufnahme zumindest eines Teils der Wischleiste ausbildet, wobei die zumindest drei Richtungen in der Ebene liegen und jede der zumindest drei Richtungen mit zumindest einer der zwei anderen Richtungen einen Winkel von 90° bildet. Bei einer geeigneten Auslegung kann dadurch bei gleichem Materialeinsatz eine Trageinheit mit erhöhter Biegesteifigkeit bereitgestellt werden, die gleichzeitig ausreichend flexibel ist, um bei einer in einem betriebsbereiten Einbauzustand durch den Wischerarm auf die Wischleiste ausgeübten mechanischen Last eine gleichmäßige Flächenpressung entlang der Haupterstreckungsrichtung zwischen Wischleiste und Scheibe zu gewährleisten. Unter einer "gleichmäßigen Flächenpressung" soll in diesem Zusammenhang insbesondere verstanden werden, dass die Kraft pro Flächeneinheit entlang der Haupterstreckungsrichtung der Wischleiste weniger als 30%, bevorzugt weniger als 20% und besonders bevorzugt weniger als 10% von einem Mittelwert der Kraft pro Flächeneinheit abweicht. Durch die gleichmäßige Flächenpressung zwischen Wischblatt und Scheibe lässt sich ein Umlegevorgang der Wischleiste verbessern, ein Umlegegeräusch der Wischleiste vorteilhaft verringern und Anforderungen an Eigenschaften der verwendeten Materialien hinsichtlich einer plastischen Druckverformung (compression set), insbesondere bei erhöhter Umgebungstemperatur, können vermindert werden, so dass ein kostengünstiges Wischblatt mit verbesserten Andruckeigenschaften bereitgestellt werden kann.

Vorteilhaft weist der von der Trageinheit gebildete Hohlraum in einem Schnitt mit der Ebene eine im Wesentlichen rechteckförmige oder trapezförmige Querschnittsfläche auf. Grundsätzlich kann die Querschnittsfläche aber auch im Wesentlichen von anderen geschlossenen Polygonzügen begrenzt sein. Unter "im Wesentlichen" soll in diesem Zusammenhang insbesondere verstanden werden, dass eine Abweichung der Querschnittsfläche des Hohlraums von der Querschnittsfläche eines in die Querschnittsfläche des Hohlraums einbeschriebenen Polygons geringer ist als 20%, besonders bevorzugt geringer als 10% der Querschnittsfläche des Hohlraums in der Ebene.

Wenn eine Begrenzung des Hohlraums zumindest zwei Paare von sich jeweils parallel gegenüberstehenden Seitenteilen umfasst, kann eine konstruktiv besonders einfache und zuverlässige Kopplung der Trageinheit und der Wischleiste erreicht werden.

Weiterhin wird vorgeschlagen, dass die federelastische Trageinheit eine mechanische Vorbiegung mit einer Krümmung in der Haupterstreckungsrichtung aufweist, die einer Krümmung der Scheibe gleichgerichtet ist. Dadurch kann eine gleichmäßige Flächenpressung zwischen Wischblatt und Scheibe auf eine konstruktiv besonders einfache Weise erreicht werden. Unter einer "Vorbiegung der Trageinheit" soll in diesem Zusammenhang insbesondere eine Form verstanden werden, die die Trageinheit in einem kräftefreien Zustand einnimmt. Durch die federelastische Eigenschaft der Trageinheit ist diese durch Krafteinwirkung elastisch verformbar, so dass sie ohne die Krafteinwirkung selbsttätig in die jeweilige Form ihrer mechanischen Vorbiegung zurückkehrt. Unter einer "gleichgerichteten Krümmung" soll in diesem Zusammenhang insbesondere verstanden werden, dass Mittelpunkte von zwei gedachten Kreisen, die für die federelastische Trageinheit und die Scheibe beste Näherungen an deren Geometrie darstellen, auf gleichen Seiten relativ zur Trageeinheit bzw. zur Scheibe angeordnet sind. Die federelastische Eigenschaft der Trageinheit ist bevorzugt derart bemessen, dass die mechanische Vorbiegung durch Einwirkung einer Kraft von vorteilhaft weniger als 30 N, bevorzugt weniger als 20 N und besonders bevorzugt weniger als 10 N vollständig ausgleichbar ist.

Mit besonderem Vorteil ist die Krümmung der federelastischen Trageinheit in der Haupterstreckungsrichtung um einen vorbestimmten Mindestbetrag größer als die Krümmung der Scheibe. Unter einem "Betrag der Krümmung" soll in diesem Zusammenhang insbesondere der Betrag eines Kehrwerts eines Radius des gedachten Kreises verstanden werden, der die beste Näherung an die Geometrie der federelastischen Trageinheit darstellt. Dadurch kann erreicht werden, dass sich im betriebsbereiten Einbauzustand besonders in Endbereichen der Trageinheit eine gleichmäßige Flächenpressung zwischen Wischleiste und Scheibe einstellt.

Wenn die federelastische Trageinheit im Wesentlichen aus einem Material besteht, das aus einer Materialgruppe gewählt ist, die aus den Materialien Stahl, Aluminium und Kunststoff gebildet ist, kann die Trageinheit mit federelastischen Eigenschaften auf eine besonders einfache und kostengünstige Weise bereitgestellt werden. Unter "im Wesentlichen" soll in diesem Zusammenhang insbesondere verstanden werden, dass die Trageinheit zu mindestens 60%, besonders bevorzugt zu mindestens 70% aus einem der genannten Werkstoffe besteht. Die Trageinheit kann aber auch vollständig, d.h. zu 100%, aus einem der genannten Werkstoffe bestehen. Insbesondere können bei einer Ausbildung der Tragelemente aus Kunststoff dem Fachmann geläufige Formgebungsverfahren wie Spritzgießen zur hochpräzisen Herstellung der Vorbiegung der Trageinheit eingesetzt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 ein erfindungsgemäßes Wischblatt in einem betriebsbereiten Einbauzustand an einem Wischerarm in einer vereinfachten, teilgeschnittenen Gesamtansicht von oben,
Fig. 2 eine Schnittansicht eines Details des Wischblatts gemäß der Fig. 1 entlang einer Linie A-A',
Fig. 2a eine weitere Schnittansicht der Trageinheit entlang der Linie A-A', und
Fig. 3 eine Trageinheit des Wischblatts gemäß der Fig. 1 in einer losgelösten Anordnung in einer Ansicht gemäß der Fig. 1.

### Beschreibung des Ausführungsbeispiels

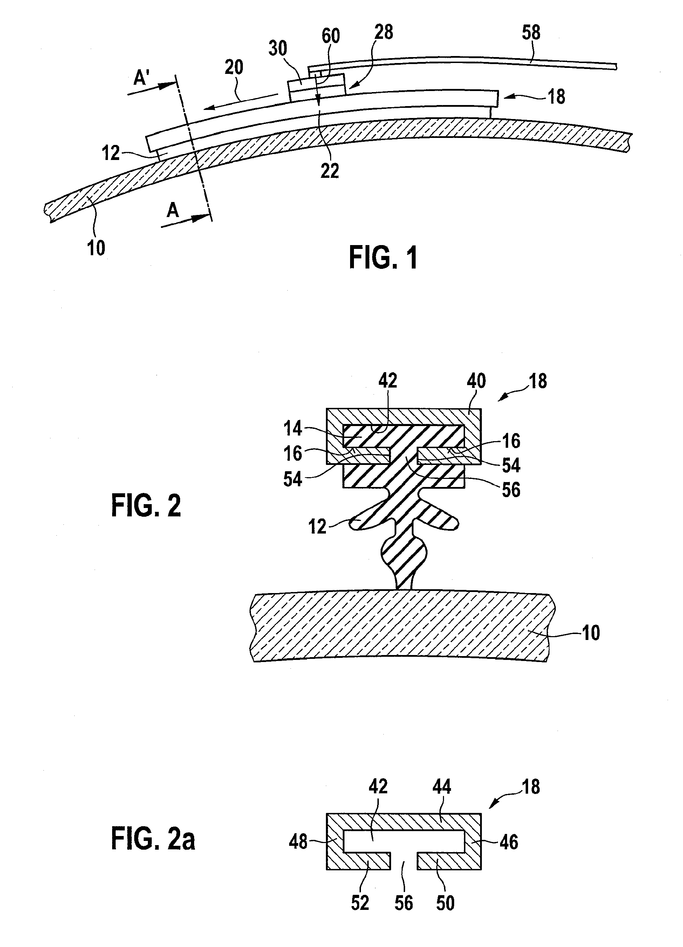

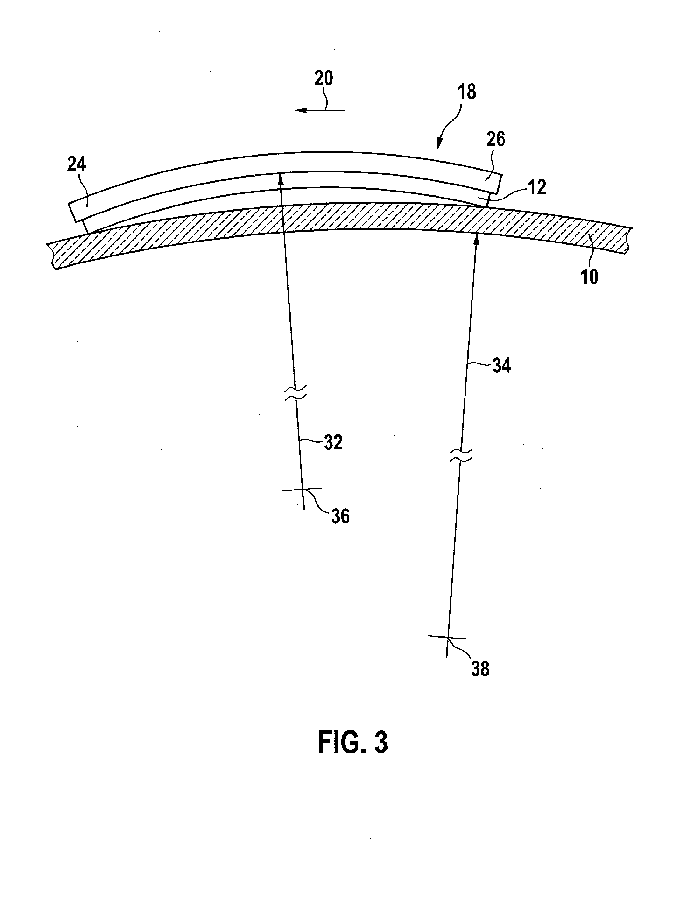

Fig. 1 zeigt ein Wischblatt zum Wischen einer Scheibe 10 eines Kraftfahrzeugs in einer teilgeschnittenen Gesamtansicht von oben. Das Wischblatt weist eine an der zu wischenden Scheibe 10 anlegbare, gummielastische Wischleiste 12 mit einer Haupterstreckungsrichtung 20 auf. Parallel zur Haupterstreckungsrichtung 20 ist die Wischleiste 12 an einerfederelastischen Trageinheit 18 gehalten, die einen Mittelabschnitt 22 und zwei Endbereiche 24, 26 aufweist (Fig. 3). In dem Mittelabschnitt 22 der Trageinheit 18 ist auf einer in einem betriebsbereiten Einbauzustand von der Scheibe 10 abgewandten oberen Seite eine Anschlussvorrichtung 28 für in Richtung zur Scheibe 10, senkrecht zur Haupterstreckungsrichtung 20 belastende Gegenanschlussmittel 30 eines zwischen Umkehrlagen bewegbaren Wischerarms 58 angeordnet.

Unter einem "betriebsbereiten Einbauzustand" soll in diesem Zusammenhang insbesondere ein Zustand des Wischblatts verstanden werden, in dem das auslegungsgemäß zusammengebaute Wischblatt an einer dafür vorgesehenen Stelle des Kraftfahrzeugs installiert ist.

Geeignete Anschlussvorrichtungen 28 sind aus dem Stand der Technik bekannt und sollen daher hier nicht näher dargestellt werden. Die Anschlussvorrichtung 28 kann eine Gelenkeinheit zu einer Verstellung einer relativen Lage des Wischblatts in Bezug auf den Wischarm 58 beinhalten. Grundsätzlich kann die Anschlussvorrichtung aber auch gelenkfrei ausgeführt sein.

Die Trageinheit 18 umfasst eine Profilschiene 40 aus Stahl (Fig. 2), die in einem in der Haupterstreckungsrichtung 20 zusammenhängenden Teilabschnitt, der mit einer Gesamtlänge der Trageinheit 18 übereinstimmt, einen Hohlraum 42 ausbildet. In einer senkrecht zur Haupterstreckungsrichtung 20 liegenden Schnittebene, die in der Fig. 2 dargestellt ist, weist die Profilschiene 40 einen im Wesentlichen rechteckförmigen Querschnitt auf. In einem betriebsbereiten Zusammenbauzustand des Wischblatts begrenzen an einer der Scheibe 10 zugewandten Seite der Profilschiene 40 einander gegenüberstehende Profilflanken 54 einen Längskanal 56 der Profilschiene 40.

Unter einem "betriebsbereiten Zusammenbauzustand" soll in diesem Zusammenhang insbesondere ein Zustand des Wischblatts verstanden werden, in dem alle Bestandteile des Wischblatts auslegungsgemäß zusammengebaut sind.

Der Hohlraum 42 ist im betriebsbereiten Einbauzustand des Wischblatts in einer von der Scheibe 10 abgewandten Richtung, die in der Schnittebene liegt, sowie in zwei ebenfalls in der Schnittebene liegenden und mit der von der Scheibe 10 abgewandten Richtung einen Winkel von 90° bildenden Richtungen von der Trageinheit 18 begrenzt.

Der Hohlraum 42 ist zur Aufnahme der Wischleiste 12 vorgesehen, die mit einem einstückig angeformten, T-förmigen Kopfteil 14 an einem der zwei Endbereiche 24, 26 (Fig. 3) der Trageinheit 18 in den Längskanal 56 der Profilschiene 40 einführbar ist. Der Hohlraum 42 der Profilschiene 40 und Abmessungen des Kopfteils 14 sind aufeinander abgestimmt, so dass die Wischleiste 12 im betriebsbereiten Zusammenbauzustand durch das Kopfteil 14 verliersicher im Hohlraum 42 gehalten ist. Dabei ist das Kopfteil 14 der Wischleiste 12 an der Scheibe 10 zugewandten Auflageflächen 16 von die Profilflanken 54 bildenden Seitenteilen 50, 52 der Profilschiene 40 unterstützt, so dass eine Begrenzung des Hohlraums 42 drei Paare von sich parallel gegenüberstehenden Seitenteilen 44, 46, 48, 50 umfasst (Fig. 2a).

Wie in der Fig. 3 gezeigt, weist die Trageinheit 18 in einem kräftefreien, vom Wischblatt losgelösten Zustand eine mechanische Vorbiegung auf. Eine aufgrund der Vorbiegung resultierende Krümmung in der Haupterstreckungsrichtung 20 lässt sich in ihrer Geometrie durch eine gedachte Kreisbahn mit einem Kreisradius 32 und einem Kreismittelpunkt 36 annähern. Eine Krümmung der Scheibe 10 ist ebenso durch eine gedachte Kreisbahn mit einem Kreisradius 34 und einem Kreismittelpunkt 38 beschreibbar. Ein Betrag der Krümmung der Trageinheit 18 entspricht in bekannter Weise einem Kehrwert des Kreisradius 32 und ein Betrag der Krümmung der Scheibe 10 entspricht einem Kehrwert des Kreisradius 34.

Bei der in der Fig. 3 gezeigten federelastischen Trageinheit 18 sind im betriebsbereiten Einbauzustand die Krümmung in der Haupterstreckungsrichtung 20 und die geometrische Krümmung der Scheibe 10 gleichgerichtet, da deren Kreismittelpunkte 36, 38 auf derselben Seite der Trageinheit 18 bzw. der Scheibe 10 liegen. Der Betrag der Krümmung der federelastischen Trageinheit 18 in der Haupterstreckungsrichtung 20 ist um einen vorbestimmten Betrag von 10% größer als der Betrag der Krümmung der Scheibe 10. Bei einer Einrichtung des betriebsbereiten Einbauzustands liegt demnach die Wischleiste 12 zunächst an den Endbereichen 24, 26 der Trageinheit 18 auf. Eine von dem Wischerarm 58 auf die Anschlussvorrichtung 28 im Mittelabschnitt 22 der Trageinheit 18 ausgeübte Kraft 60 (Fig. 1) bewirkt durch Einleitung in die Endbereiche 24, 26 der Trageinheit 18 eine Reduzierung der durch die mechanische Vorbiegung hervorgerufenen Krümmung, bis die Krümmung der Trageinheit 18 die Krümmung der Scheibe 10 erreicht und die Wischleiste 12 in ihrer vollen Länge auf der Scheibe 10 aufliegt, so dass der in Fig. 1 gezeigte betriebsbereite Einbauzustand erreicht ist. Dadurch wird eine gleichmäßige Flächenpressung zwischen der Wischleiste 12 und der Scheibe 10 erzielt.

## Patentansprüche

1. Wischblatt zum Wischen von Scheiben (10), insbesondere von Scheiben (10) von Kraftfahrzeugen, mit einer an der zu wischenden Scheibe (10) anlegbaren, gummielastischen Wischleiste (12), die eine Haupterstreckungsrichtung (20) aufweist und im Wesentlichen parallel zur Haupterstreckungsrichtung (20) an einer federelastischen Trageinheit (18) gehalten ist, mit einer in einem Mittelabschnitt (22) der Trageinheit (18) auf einer von der Scheibe (10) abgewandten oberen Seite angeordneten Anschlussvorrichtung (28) für in Richtung zur Scheibe (10) belastende Gegenanschlussmittel (30) eines zwischen Umkehrlagen bewegbaren Wischerarms (58), **dadurch gekennzeichnet, dass** die federelastische Trageinheit (18) zumindest in einem in der Haupterstreckungsrichtung (20) zusammenhängenden Teilabschnitt in einer senkrecht zur Haupterstreckungsrichtung (20) liegenden Ebene einen in zumindest drei Richtungen begrenzten Hohlraum (42) zur Aufnahme zumindest eines Teils der Wischleiste (12) ausbildet, wobei die zumindest drei Richtungen in der Ebene liegen und jede der zumindest drei Richtungen mit zumindest einer der zwei anderen Richtungen einen Winkel von 90° bildet.

2. Wischblatt nach Anspruch 1, **dadurch gekennzeichnet, dass** eine Begrenzung des Hohlraums (42) zumindest zwei Paare von sich jeweils parallel gegenüberstehenden Seitenteilen (44, 46, 48, 50, 52) umfasst.

3. Wischblatt nach Anspruch 1 oder 2, **dadurch gekennzeichnet, dass** die federelastische Trageinheit (18) eine mechanische Vorbiegung mit einer Krümmung in der Haupterstreckungsrichtung (20) aufweist, die einer Krümmung der Scheibe (10) gleichgerichtet ist.

4. Wischblatt zumindest nach Anspruch 3, **dadurch gekennzeichnet, dass** die Krümmung der federelastischen Trageinheit (18) in der Haupterstreckungsrichtung (20) um einen vorbestimmten Mindestbetrag größer ist als die Krümmung der Scheibe (10).

5. Wischblatt nach einem der vorhergehenden Ansprüche, **dadurch gekennzeichnet, dass** die federelastische Trageinheit (18) im Wesentlichen aus einem Material besteht, das aus einer Materialgruppe gewählt ist, die aus den Materialien Stahl, Aluminium und Kunststoff gebildet ist.
